# EUROPEAN PATENT APPLICATION

(11) **EP 2 229 910 A2**
(43) Date of publication of application: **22.09.2010**
(21) Application number: 09015080.6
(22) Date of filing: 04.12.2009
(51) Int. Cl.: A61C 3/03, B22F 3/22

(54) **Dental scaler tip for dental implant and manufacturing method of dental scaler tip**

(30) Priority: 20.03.2009 KR 20090023959
(71) Applicant: CetaTech, Inc. Technological Innovation Center for Mechanical parts of Automobiles, Yonghyeon-myeon Sacheon-si, Gyeongsangnam-do 664-953 (KR); B&L Biotech Co., Ltd., 1136-1 Sanbon-dong Gunpo-si, Gyeonggi-do 435-040 (KR)
(72) Inventor: Kwon, Young San, Seoul 135-970 (KR); Lee, In Hwan, Seoul 135-110 (KR)
(74) Representative: Beier, Ralph

(57) **Abstract**

Disclosed are a scaler tip for a dental implant using a Powder Injection Molding (PIM) of silver, copper, a silver alloy, or a copper alloy, and a method for manufacturing the scaler tip. The scaler tip includes a shank portion, and a work portion extendedly formed from an end of the shank portion and including a curved portion. Here, the scaler tip is formed by performing the PIM on at least one metal powder of silver, copper, the silver alloy, and the copper alloy.

## Description

### BACKGROUND

### 1. Field of the Invention

The present invention relates to a scaler tip for a dental implant, and more particularly, to a method for manufacturing a scaler tip for a dental implant using Powder Injection Molding (PIM) and to a scaler tip manufactured by the method.

### 2. Description of the Related Art

A dental implant may denote an artificial tooth structure that may be installed in portions where teeth are partially or completely lost to replace a tooth or a group of teeth, or may denote a dental treatment method using the artificial tooth structure. In general, the dental implant includes an implant fixture and an abutment, that is, an artificial tooth root, and a crown or prosthesis, that is, an artificial tooth. The implant fixture may be installed in an alveolar bone of a patient to act as a tooth root, the prosthesis may be formed identical to or similar to a shape and color of lost teeth to thereby form an appearance of artificial teeth, and the abutment may permit the prosthesis to be fixed in the implant fixture and transmit a load exerting on the prosthesis to the implant fixture and the alveolar bone.

Tartar, accumulated on an outer surface of the prosthesis or the implant fixture after installing the implant, may damage the implant and form a pocket around the implant. Accordingly, to prevent the tartar from being accumulated, a periodontal treatment is required.

As for the above described implant treatment, an ultrasonic scaler tip that may remove the tartar by vibrating a tip using ultrasonic activation. In general, the ultrasonic tip for a dental implant may have a sharp end having a decreased cross-sectional area.

In addition, a typical ultrasonic scaler tip may damage a surface of the implant while removing the tartar. The typical ultrasonic scaler tip may be made of a stainless steel having a relatively high hardness while the implant is made of a titanium material having a relatively low hardness, and thereby the damage may be generated on the surface of the implant due to a difference in the hardness between the typical ultrasonic scaler tip and the implant. However, when the above described surface damage is generated, an environment in which a surface roughness increases, and a biofilm or dental plaque and the tartar may be easily generated in rough parts together with bacterium may be created. The above-mentioned biofilm, the dental plaque, and the tartar may cause an inflammation of a periodontal tissue eventually causing a vertical bone destruction of the alveolar bone, and an adverse influence on a lifetime of the implant.

In related arts, to prevent the surface damage of the implant, a plastic curette having a hardness lower than that of titanium or a scaler tip made of a plastic or carbon material may be used. However, as compared with an existing metal scaler tip, the plastic currette or the scaler tip made of the plastic or carbon material may have a significantly decreased efficiency in removing the tartar, and have a relatively low durability and relatively short lifetime due to a severe abrasion of the scaler tip.

Accordingly, in recent years, there have been several studies conducted for a method of manufacturing a scaler tip that may improve the durability and a tartar removal effect, and for a simple manufacturing method of the scaler tip.

### SUMMARY

An aspect of the present invention is to provide a scaler tip for a dental implant that may be highly effective in removing tartar, and may have a high durability, and to provide a method for manufacturing the scaler tip.

Another aspect of the present invention is to provide a scaler tip for a dental implant that may not damage an implant when removing tartar generated on a surface of the implant.

According to an aspect of the present invention, there is provided a scaler tip for a dental implant, including: a shank portion; and a work portion extendedly formed from an end of the shank portion and including a curved portion. Here, the scaler tip may be formed by performing a powder injection molding (PIM) on at least one metal powder of silver, copper, a silver alloy, and a copper alloy.

In this instance, an average particle size of the metal powder may be about 0.1 µm to about 30 µm, and the metal powder may be formed into a sphere or a shape similar to the sphere. Also, the scaler tip may have about 100 Vickers hardness (HV) or less.

According to another aspect of the present invention, there is provided a method for manufacturing a scaler tip for a dental implant, the method including: forming a feedstock using at least one metal powder of silver, copper, a silver alloy, and a copper alloy; forming an injection molded object by injecting the feedstock; removing a binder from the injection molded object; and sintering the injection molded object.

In this instance, an average particle size of the metal powder may be about 0.1 µm to about 30 µm, and the metal powder may be formed into a sphere or a shape similar to the sphere. Also, a hardness of the sintered injection molded object may be about 100 HV or less as a Vickers hardness.

Also, the method may further include plating the sintered injection molded object with gold or silver.

### EFFECT

As described above, according to embodiments of the present invention, it is possible to manufacture a scaler tip for a dental implant using Powder Injection Molding (PIM) while having a similar size and weight of a standardized scaler tip, thereby being applicable in a general scaler device, and increasing a tartar removal effect, and improve precision and convenience of treatment.

Also, according to embodiments of the present invention, the scaler tip for the dental implant may have a lower hardness and strength compared to a material, thereby preventing a surface damage of an implant when a treatment is performed.

### BRIEF DESCRIPTION OF THE DRAWINGS

The above and/or other aspects and advantages of the present invention will become apparent and more readily appreciated from the following detailed description, taken in conjunction with the accompanying drawings of which:
FIG. 1 is a flowchart illustrating a method for manufacturing a scaler tip for a dental implant according to an exemplary embodiment of the present invention;
FIG. 2 is a perspective diagram illustrating a scaler tip for a dental implant according to an exemplary embodiment of the present invention;
FIGS. 3A and 3B are photos showing a surface damage of an implant when using a conventional scaler tip for a dental implant; and
FIGS. 4A and 4B are photos showing a surface of an implant when using a scaler tip for a dental implant according to an exemplary embodiment of the present invention.

### DETAILED DESCRIPTION

Reference will now be made in detail to exemplary embodiments of the present invention, examples of which are illustrated in the accompanying drawings, wherein like reference numerals refer to the like elements throughout. The exemplary embodiments are described below in order to explain the present invention by referring to the figures.

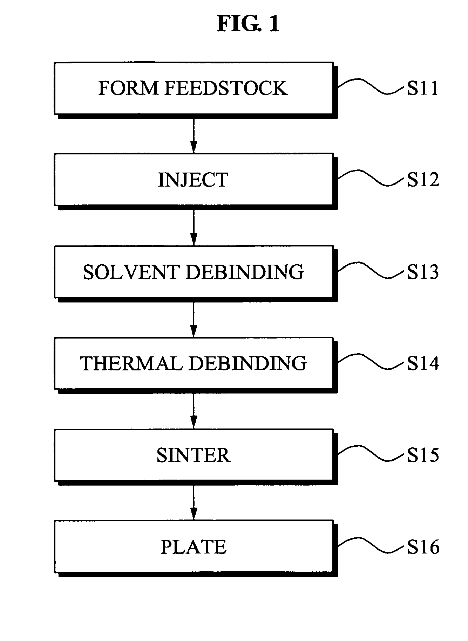

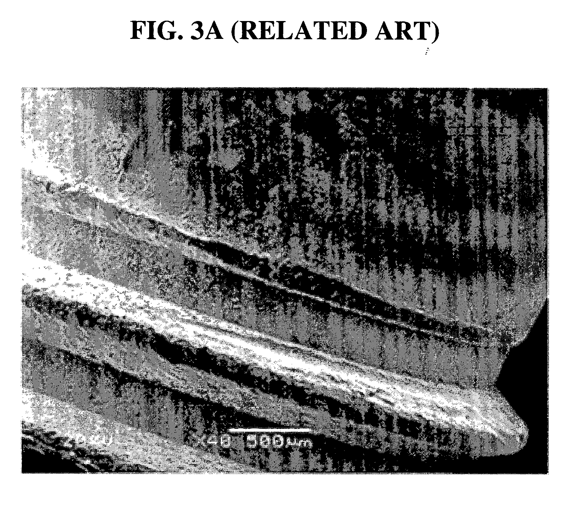

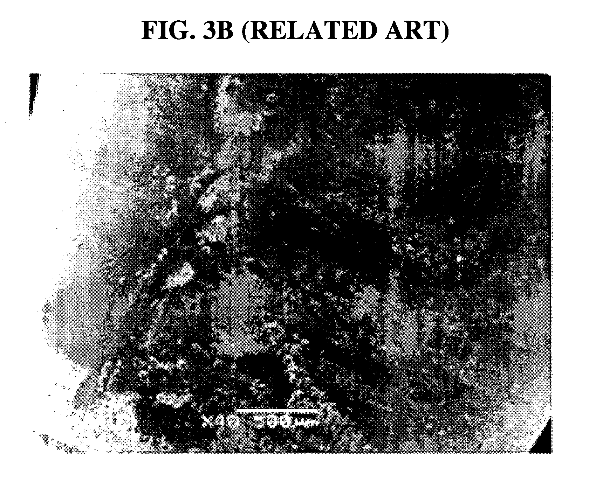

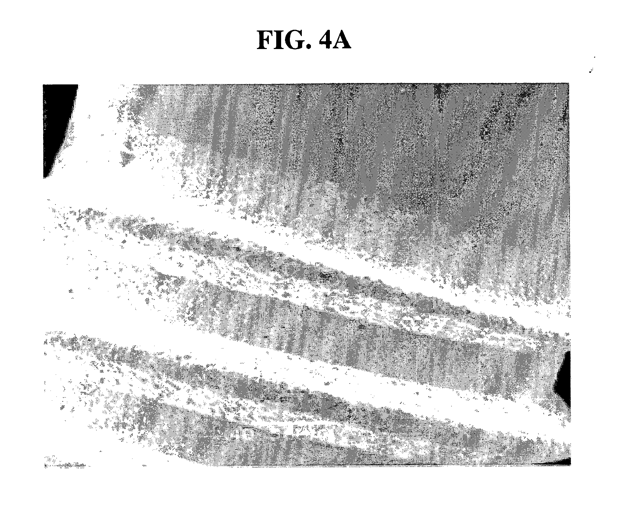

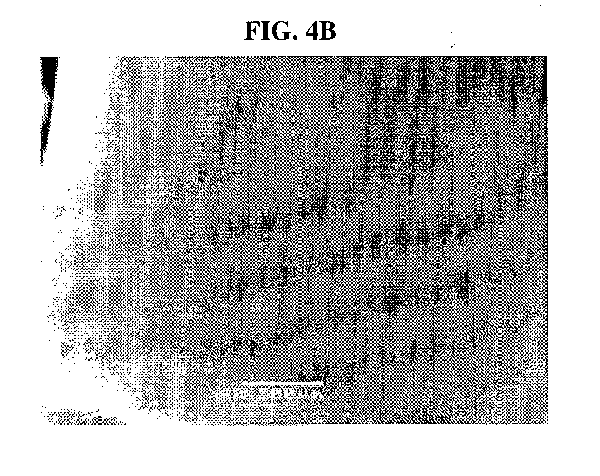

Hereinafter, a scaler tip for a dental implant according to an exemplary embodiment of the present invention and a method for manufacturing the scaler tip will be described in detail with reference to FIGS. 1 to 4B.

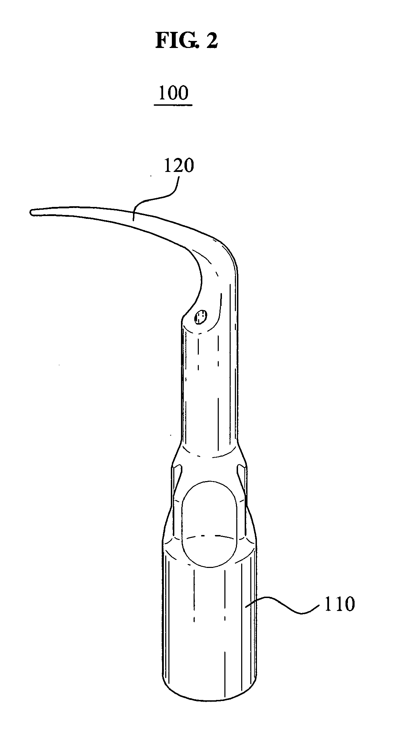

Referring to FIGS. 1 and 2, the scaler tip 100 for the dental implant may perform a treatment on teeth or an implant using its vibration or rotation. For example, the scaler tip 100 may be used in a scaling treatment for removing, from teeth, a biofilm, dental plaque, and tartar that may cause a periodontal disease within an oral cavity. Hereinafter, the scaler tip 100 used in scaling an installed implant or in removing a cement after equipping a prosthesis will be described in detail. However, exemplary embodiments of the present invention are not limited thereto, and the scaler tip 100 may be applied to an apparatus used in a treatment performed on teeth or the implant.

The scaler tip 100 may include a shank portion 110 coupled to a predetermined driving device, such as an ultrasonic generation device and the like, and a work portion 120 extendedly formed from an end of the shank portion 110 and directly contacting with an object to remove tartar. Here, the work portion 120 may include a curved portion curvedly formed from an end of the shank portion 110 so that a contact with teeth, the implant, a gum, and the like, which are to be an object, becomes easy. The shank portion 110 and the work portion 120 may be integrally formed using Powder Injection Molding (PIM).

The scaler tip 100 may form a feedstock in operation S11, and form an injection molded object by injecting the feedstock in operation S12. Next, the scaler tip 100 may perform a solvent debinding in operation S 13 and perform a thermal debinding in operation S14, so as to remove a binder from the injection molded object. Next, the scaler tip 100 may sinter the injection molded object in which the solvent and thermal debinding are terminated in operation S15. Here, according to exemplary embodiments of the present invention, since the PIM is used in manufacturing the scaler tip 100, the scaler tip 100 may be manufactured using a material having a relatively low hardness, such as silver or copper, even though a shape of the scaler tip 100 is complex. Also, by using the PIM, a limitation in which a complex shaped-body is difficult to be manufactured using a material with a relatively low hardness in an existing mechanical processing or casting may be overcome, and a mass production and an economical efficiency may be improved as compared with the mechanical processing or casting.

In operation S11, to manufacture the scaler tip 100, the feedstock may be formed using at least one metal powder of silver, copper, a silver alloy, and a copper alloy. The feedstock may be a fluid having a predetermined viscosity so that the feedstock is fed to a mold used for a general injection molding, and may be formed such that the at least one metal powder of silver, copper, the silver alloy, and the copper alloy and the binder may be mixed with a predetermined mixture ratio in an appropriate temperature. In this instance, an average particle size of the metal powder may be about 0.1 µm to about 30 µm, and the metal powder may be formed into a sphere or a shape similar to the sphere. When the average particle size of the metal powder is smaller than 0.1 µm, the mixture and injection of the feedstock may be difficult to be performed, and when the average particle size thereof is larger than 30 µm, a sintering property may be deteriorated. As the metal powder has a shape similar to the sphere or have a smooth and gentle outer surface, the mixture and injection of the feedstock may be easily performed. Here, the 'sphere' according to an exemplary embodiment of the present invention may include all shapes similar to the sphere, such as a polyhedron having gentle edges or surfaces, as well as a completely spherical shape.

The binder may provide a fluidity so that the feedstock is evenly injected to an inside of the mold in an injection process, and may be used to improve a strength of the injection molded object. As the binder, a general single binder may be used, and in some cases, various binders having different melting points may be used together. For example, the binder may be formed such that a paraffin wax, a polyethylene, a polypropylene, a stearic acid, and the like may be mixed. Also, the binder may include a bonding agent, a lubricant, a plasticizer, a surfactant, and the like. Here, exemplary embodiments of the present invention are not limited thereto, and the mixture ratio of the metal powder and the binder of the feedstock, may be variously changed depending on required conditions.

Next, in operation S12, the feedstock may be injected to the inside of the predetermined mold to form the injection molded object. The injection molded object of the scaler tip 100 may be obtained such that the feedstock is injected to an inside of a mold having a predetermined cavity, and is cooled/coagulated in the inside of the mold. Here, when a solvent and bubbles are discharged while the injection molded object is being subjected to the solvent debinding of operation S13, the thermal debinding of operation S 14, and the sintering of operation S 15, a volume of the injection molded object may be reduced. Accordingly, in operation S12, the injection molded object required to be formed has an increased volume as compared with that of the finally obtained scaler tip 100, based on the reduction in the volume of the injection molded object.

Next, in operations S 13 and S 14, debinding processes for removing the binder included in the injection molded object may be performed. When the feedstock includes various binders having different properties such as different melting points, the debinding processes of operations S13 and S14 may be performed several times. For example, in the solvent debinding of operation S 13, a wax such as a paraffin wax and the like of the binder included in the injection molded object may be removed using a solvent such as an N-hexane, a heptane, a thinner, and the like. In the thermal debinding of operation S 14, the injection molded object in which the solvent debinding is terminated may be subjected to a thermal treatment to remove a remaining binder. However, exemplary embodiments of the present invention are not limited thereto, and an electrolytic debinding, an ultrasonic debinding, and the like, other than the solvent debinding of operation S 13 and the thermal debinding of operation S 14, may be applied.

Next, in operation S15, the injection molded object in which the above described debinding processes are performed on may be sintered at a predetermined temperature and under a hydrogen or inert atmosphere to thereby obtain the scaler tip 100. Here, in the sintering process of operation S 15, a sintering temperature, a time, and an atmosphere may be determined depending on a type and particle size of the metal powder used in the feedstock and depending on an additive. For example, the scaler tip 100 formed of 99% silver may be sintered at a temperature of about 800°C to about 960°C, and the scaler tip 100 formed of 99% copper may be sintered at a temperature of about 950°C to about 1080°C.

In addition, the thermal debinding process of operation S14 may be simultaneously performed in the sintering process of operation S15. That is, the injection molded object in which the solvent debinding process of operation S 13 is terminated may be put in a sintering furnace, and may be subjected to a thermal treatment, whereby a remaining binder may be removed from the injection molded object by the thermal treatment, and simultaneously the injection molded object may be sintered. According to exemplary embodiments of the present invention, by combining the thermal debinding process and the sintering process, a manufacturing process of the scaler tip may be reduced, and a productivity of the scaler tip may be improved.

The above described scaler tip 100 may be formed using a material having a hardness and strength lower than an object so as to prevent a surface damage of teeth or the implant. Here, the implant may be generally formed using titanium, and the scaler tip 100 may be formed using at least one of silver, copper, the silver alloy, and the copper alloy to prevent a surface damage of a fixture or an implant made of titanium or a surface damage of a prosthesis made of a ceramic or a metal material. For example, the titanium used in the implant may be classified into a Grade 1 (UNS R50250; ASTM Grade 1) to a Grade 4 (UNS R50700; ASTM Grade 4) based on an oxygen content within the titanium material. In a case of the Grade 1, a Vickers hardness (HV) may be about 122HV, and in a case of the Grade 4 having a high oxygen content, the HV may be about 280HV. The scaler tip 100 may have a hardness lower than that of titanium for the implant, and may have a hardness of about 100HV or less after the sintering process is terminated. According to exemplary embodiments of the present invention, the scaler tip 100 may have a hardness lower than that of the ceramic or titanium to be an object, and thus the scaler tip 100 itself may be worn when performing a treatment, thereby preventing a surface damage or a crack and fracture from being generated on an object.

In addition, a tartar removal effect of the scaler tip 100 may be affected by a weight and size of the scaler tip 100. The scaler tip 100 according to exemplary embodiments of the present invention may be formed using at least one of the metal powder of copper, silver, the copper alloy, and the silver alloy, whose hardness is lower than that of titanium and whose density and weight is similar to that of a stainless steel. For example, the scaler tip 100 may use either a powder of 99% copper or more or a powder of 99% silver or more, or may use at least one of an alloy of copper (70%-99%) and tin (30%-1 %), an alloy of copper (80%-99%) and zinc (20%-1 %), an alloy of silver (70%-99%) and copper (30%-1%). In this instance, a weight of the scaler tip 100 may be somewhat increased depending on the copper or silver content, and thus a number of ultrasonic vibrations may be reduced. Accordingly, by reducing the size of the scaler tip 100 or correcting a shape of the scaler tip 100 according to a weight of a material, the scaler tip 100 may have a similar weight to a weight of an existing stainless steel.

Here, to improve mixture, injection, and sintering properties of the feedstock when performing the PIM, the feedstock of the scaler tip 100 may be formed using a metal powder having an average particle size of about 0.1 µm to about 30 µm. Also, the metal powder may be formed into a sphere or a shape similar to the sphere, and have a smooth outer surface. That is, when the particle size of the metal powder is 0.1 µm or less, the mixture and injection of the feedstock may be difficult to be performed. When the particle size thereof is 30 µm or more, the sintering property of the feedstock may be deteriorated. As the metal powder has the shape similar to the sphere or the smooth and gentle surface, the mixture and injection of the feedstock may be easily performed.

In addition, in operation S16, a plating process may be performed on the sintered scaler tip 100 obtained after sintering the scaler tip 100 formed using at least one of the metal powder of copper, silver, the copper alloy, and the silver alloy in operation S 15. Since the scaler tip 100 may be disinfected at a temperature of about 100 °C or more for every use, the scaler tip 100 formed using at least one of the metal powder of copper, silver, the copper alloy, and the silver alloy may easily disintegrate due to an oxidation. In order to prevent the oxidation of the scaler tip 100, the plating may be performed on an outer surface of the scaler tip 100. The plating may be also be performed using a material having a hardness lower than that of the object, and gold or silver being harmless to a human body and having a good affinity may be used. However, in a case of the scaler tip 100 formed of silver, the plating process using gold or silver for surface oxidation prevention may be omitted due to a relatively low oxidation property of silver.

Although a few exemplary embodiments of the present invention have been shown and described, the present invention is not limited to the described exemplary embodiments. Instead, it would be appreciated by those skilled in the art that changes may be made to these exemplary embodiments without departing from the principles and spirit of the invention, the scope of which is defined by the claims and their equivalents.

## Claims

1. A scaler tip for a dental implant, comprising:
a shank portion; and
a work portion extendedly formed from an end of the shank portion and including a curved portion,
wherein the scaler tip is formed by performing a powder injection molding (PIM) on at least one metal powder of silver, copper, a silver alloy, and a copper alloy.

2. The scaler tip for a dental implant of claim 1, wherein an average particle size of the metal powder is about 0.1 µm to about 30 µm.

3. The scaler tip for a dental implant of claim 1, wherein a volume of the shank portion and a volume of the work surface are adjusted by about 5% to about 35% according to a specific gravity of the metal powder to thereby have a similar weight to a weight of a scaler tip made of a stainless steel.

4. The scaler tip for a dental implant of claim 1, wherein the scaler tip has about 100 Vickers hardness (HV) or less.

5. A method for manufacturing a scaler tip for a dental implant, the method comprising:
forming a feedstock using at least one metal powder of silver, copper, a silver alloy, and a copper alloy;
forming an injection molded object by injecting the feedstock;
removing a binder from the injection molded object; and
sintering the injection molded object.

6. The method of claim 5, wherein an average particle size of the metal powder is about 0.1 µm to about 30 µm.

7. The method of claim 5, wherein a hardness of the sintered injection molded object is about 100 HV or less as a Vickers hardness.

8. The method of claim 5, further comprising:
plating the sintered injection molded object with gold or silver.
